# EUROPÄISCHE PATENTSCHRIFT

(11) **EP 1 826 043 B1**
(45) Veröffentlichungstag und Bekanntmachung des Hinweises auf die Patenterteilung: **15.04.2009**
(21) Anmeldenummer: 07101547.3
(22) Anmeldetag: 01.02.2007
(51) Int. Cl.: B60H 1/34

(54) **Luftdüse**
Air jet
Tuyère d'air

(30) Priorität: 22.02.2006 DE 202006002771 U; 25.04.2006 DE 202006006598 U
(43) Veröffentlichungstag der Anmeldung: 29.08.2007
(73) Patentinhaber: Dr. Schneider Kunststoffwerke GmbH, 96317 Kronach (DE)
(72) Erfinder: Langner, René, 96342 Stockheim - Haig (DE); Uhlenbusch, Olaf, 96275 Marktzeuln (DE)
(74) Vertreter: Pröll, Jürgen

(56) Entgegenhaltungen:
- FR-A- 2 872 260
- FR-A1- 2 728 530
- US-A- 5 766 070

## Beschreibung

Die Erfindung betrifft eine Luftdüse zur Führung eines Luftstroms aus einem Luftzuführschacht oder einer Leitung in Heizungs-, Lüftungs- oder Klimaanlagen, insbesondere für Fahrgasträume in Kraftfahrzeugen mit den im Oberbegriff von Anspruch 1 benannten Merkmalen.

Für zahlreiche technische Anwendungen werden Luftdüsen zur Führung eines Luftstroms aus einem Luftzuführschacht oder einer Leitung in Heizungs-, Lüftungs- oder Klimaanlagen benötigt. Eine diesbezüglich typische Anwendung sind Luftdüsen für Fahrgasträume in Kraftfahrzeugen.

In der EP 0 810 112 A2 wird eine Runddüse für Fahrgasträume in Kraftfahrzeugen beschrieben, die ein Düsengehäuse mit mehreren schwenkbaren Lamellen an der Luftausströmöffnung aufweist. Diese Lamellen sind mit einer im Gehäuse schwenkbar gelagerten Schließklappe gekoppelt, so dass in Abhängigkeit der Lamellenstellung das Ausströmen eines Luftstroms aus der Düse freigegeben oder unterbunden wird. Allerdings ist lediglich eine Änderung der Intensität des austretenden Luftstroms möglich, jedoch keine Änderung der Austrittsrichtung. Der Luftstrom kann nur in Längsrichtung an der Vorderseite der Düse ausströmen.

Mit einer Runddüse, die aus der DE 20 2004 004 229 U1 bekannt ist, kann alternativ oder zusätzlich zu einer Luftausströmung in Längsrichtung auch ein diffus und seitlich aus der Düse austretender Luftstrom erzielt werden. Hierfür weist die Luftdüse neben schwenkbaren Lamellen an der Luftausströmöffnung zusätzliche Ausströmöffnungen am Düsengehäuse auf, durch die der Luftstrom radial abgelenkt wird.

Aus der DE 101 44 122 C1 ist eine Luftdüse bekannt, die miteinander in Wirkverbindung stehende Horizontal- und Vertikallamellen aufweist. Hierbei ist eine der Horizontallamellen als Steuerlamelle ausgebildet, deren Bewegung über zugeordnete Bauteile in eine Drehbewegung der Vertikallamellen übertragen wird. Somit wird eine Richtungsänderung des aus der Düse ausströmenden Luftstroms erreicht.

In der DE 201 01 735 U1 wird eine Luftdüse beschrieben, mit der ebenfalls die Richtung des ausströmenden Luftstroms verändert werden kann. Diese technische Lösung weist zueinander parallel angeordnete und miteinander verbundene Horizontal- sowie ebenso miteinander verbundene Vertikallamellen auf. An einer Horizontallamelle ist ein als Griff ausgestaltetes Betätigungselement verschiebbar angeordnet, das mit einer Vertikallamelle derart in Wirkverbindung steht, dass alle Vertikallamellen verschwenkt werden können.

Aus der DE-AS-21 40 369 ist ein Lüftungsgitter für Fahrzeuge, insbesondere Schienentriebfahrzeuge, bekannt, das zwei oder mehrere Reihen senkrecht hintereinander und auf Lücke versetzt mit ihren Öffnungen zueinander angeordnete Lamellen von winkel-, glocken- oder wellenförmigem Querschnitt aufweist, wobei die auf Abstand voneinander stehenden Lamellen der äußeren Reihe die der inneren mit ihren Schenkeln übergreifen. Unter wellenförmige Lamelle wird dabei eine im Querschnitt ein Hohlprofil aufweisende Lamelle verstanden, die quasi einen Wellenberg darstellt. Durch diese Ausbildung wird eine Umlenkung des Luftstromes innerhalb der V-förmigen versetzt zueinander angeordneten Lamellen bewirkt und mitgenommene Sedimente können sich nicht an den Innenseiten ablagern.

Aus der DE 197 499 C1 ist eine Belüftungsdüse für Fahrzeuge mit Lamellen bekannt, bei denen die mittlere Lamelle beidseitig zu einem Drehknopf verlaufend angeordnet ist und die benachbarten Lamellen einen wellenförmigen stirnseitigen Abschluss aufweisen, um mittels Zeigefinger und Daumen die Stellschraube leichter anfassen zu können.

Aus der DE 38 35 614 A1 ist ein Lüftungsgitter für Klimatisierungseinrichtungen bekannt, das biegbare Windrichtungseinstellplatten im Gehäuse aufweist. Eine der Endseiten ist jeweils in einem Gehäuse gehalten, während die gegenüberliegende Endseite an einer Kopplungsplatte befestigt ist, die über eine Parallelhebelführung auf einem Boden innerhalb des Gehäuses schwenkbar ist.

Aus der DE 20 2004 016 983 U1 ist eine weitere Luftdüse bekannt, mit der unterschiedliche Luftströme realisiert werden können. Hierbei wird durch unterschiedliche Stellungen der Horizontallamellen alternativ eine direkte Belüftung mit gebündeltem Luftstrahl oder eine diffuse Belüftung mit aufgeweitetem Luftstrahl erreicht. Die Horizontallamellen sind durch ein Koppelelement miteinander verbunden, so dass eine zueinander abgestimmte Bewegung erreicht wird, indem die Horizontallamellen für die Realisierung einer diffusen Anströmung durch das Koppelelement aufgefächert werden.

Aus der DE 103 39 339 A1 ist eine Luftdüse bekannt, die eine Kombination eines gebündelten Luftstrahls mit einem diffusen Luftstrahl ermöglicht. Bei dieser Luftdüse wird der Strömungskanal innerhalb des Düsengehäuses in zwei baulich voneinander getrennte Teilströmungskanäle aufgeteilt, die ineinander liegend angeordnet sind. Der innere Teilströmungskanal ist schwenkbar gelagert und ermöglicht somit eine Richtungsänderung des ausströmenden Luftstroms. Der äußere Teilströmungskanal ist hingegen lagefixiert angeordnet und ermöglicht keine Änderung der Ausströmrichtung. Im äußeren Teilströmungskanal sind Strömungsschikanen angeordnet, so dass die durchströmende Luft mit einem Drall beaufschlagt wird und folglich diffus aus der Luftdüse ausströmt.

Eine ähnliche technische Lösung ist aus der DE 10 2004 038 016 A1 bekannt. Hierbei wird der Strömungskanal innerhalb der Luftdüse ebenfalls in mehrere Teilströmungskanäle aufgeteilt, die allerdings parallel zueinander angeordnet sind. Jeder dieser Kanäle weist wiederum zwei ineinander greifende Abschnitte auf, die einen gerichteten bzw. verwirbelten Luftstrom bewirken. Hierbei wird der Dralleffekt auf den durchströmenden Luftstrom durch wendelartige und spiralförmige Bauteile bewirkt, die auf der Außenkontur des inneren Teilströmungskanals angeordnet sind. Die benannten Konstruktionen ermöglichen einen diffusen Austritt des aus einer Düse ausströmenden Luftstroms, der sowohl bezüglich funktioneller Aspekte der Heizungs-, Lüftungs- oder Klimaanlage als auch bezüglich des Komfortanspruchs der jeweiligen Nutzer akzeptabel ist. Nachteilig ist allerdings der notwendige Aufwand an zahlreichen und teilweise kostenintensiven Bauteilen sowie der für die Montage entsprechend ausgestalteter Luftdüsen benötigte Bauraum.

In der US-A-5,766,070 und der DE 44 33 698 C1 ist eine Frontansicht einer Luftverteilungsvorrichtung für eine Düsenöffnung im Innenraum eines Kraftfahrzeuges dargestellt, die fünf um eine waagerechte Achse verschwenkbare, im Sinne eines bestimmten Designs leicht bogenförmig ausgebildete Richtlamellen aufweist. Hinter der vorderen Richtlamellen-Ebene sind fünf weitere, um senkrechte Schwenkachsen verschwenkbare Richtlamellen in dem Düsengehäuse eingezeichnet, die geradlinig ausgebildet sind.

Unabhängig von der jeweils konkreten Konstruktion sind die Bauteile zur Luftführung, also insbesondere die dem Düsengehäuse zugeordneten Lamellen und Schließklappen zur Anpassung des austretenden Luftstroms an die Nutzerwünsche, bei den bisher bekannten Luftdüsen als flächige Bauteile aus Kunststoff ausgestaltet. Diese Ausgestaltung ist unter Kostenaspekten vorteilhaft, weil flächige Bauteile an sich einfach und kostengünstig hergestellt werden können. Allerdings bewirkt eine solche Ausgestaltung funktionelle Mängel, weil ein flächiges Bauteil grundsätzlich eine relativ schlechte Formstabilität aufweist. Folglich können bei voller Gebläseleistung mit einem starken Luftstrom innerhalb der Düse, beispielsweise bei Ausrichtung des gesamten Luftstroms auf die Innenseite der Windschutzscheibe nach einem Kaltstart des Fahrzeuges im Winter oder bei Ausrichtung des gesamten Luftstroms auf den Fahrer nach einem Start bei großer Hitze im Sommer, Verwindungen der Lamellen oder Schließklappen auftreten. Zur Vermeidung derartiger Probleme müssen die entsprechenden Bauteile mit einem größeren Querschnitt, mit zusätzlichen Rippen oder aus einem hochwertigeren Werkstoff hergestellt werden, um eine ausreichende mechanische Stabilität zu gewährleisten. Somit erhöhen sich allerdings die Herstellungskosten. Außerdem beeinträchtigen stärkere Bauteilquerschnitte oder zusätzliche Rippen das Strömungsverhalten der vorbeiströmenden Luft, so dass akustische Nachteile wie Pfeifgeräusche oder dergleichen auftreten können.

Aufgabe der Erfindung ist es, eine Luftdüse zu schaffen, bei der die Bauteile zur Luftführung eine geometrische Ausgestaltung aufweisen, die eine einfache Herstellung ermöglicht und gleichzeitig eine ausreichende mechanische Stabilität sowie ein günstiges Strömungsverhalten gewährleistet, und bei welcher mit kostengünstigen und wenig Bauraum beanspruchenden Bauteilen eine Drallwirkung auf die durchströmende Luft erzeugt werden kann, um am Ausströmquerschnitt eine geweitete weiche und diffuse Strömung zu erzielen.

Diese Aufgabe wird gelöst durch Ausgestaltung einer Luftdüse gemäß den Merkmalen des Anspruchs 1. Vorteilhafte Ausgestaltungen sind Gegenstand der abhängigen Ansprüche, deren technische Merkmale im Ausführungsbeispiel näher beschrieben werden.

Bei einer erfindungsgemäß ausgestalteten Luftdüse weist zumindest ein Bauteil zur Luftführung einen Grundkörper auf, der mit einer wellenförmigen Querschnittskontur ausgestaltet ist. Diese Ausgestaltung kann sowohl für Horizontal- und Vertikallamellen als auch für Schließklappen im Zuführschacht einer Luftdüse realisiert werden. Das Bauteil weist stirn- oder rückseitig eine gerade Kante auf, die in einen dreidimensionalen, wellenförmig getrennten Flächenabschnitt übergeht. Somit wird für diese Bauteile eine geometrische Form realisiert, die eine einfache Herstellung mit einer durchgehend gleichmäßigen Wandstärke durch einen Spritzgussprozess ermöglicht und gleichzeitig eine ausreichende mechanische Stabilität gewährleistet.

Der Übergangsbereich zwischen zwei benachbarten Abschnitten der wellenförmigen Flächenkontur in Strömungslängsrichtung kann verschiedenartig ausgestaltet werden. So kann hierfür beispielsweise eine "harte" Wellenkontur mit einem Winkel zwischen 60° bis 80° oder auch eine "weiche" Wellenkontur mit einem Winkel zwischen 140° bis 160° gewählt werden. Mit derart unterschiedlichen Konturen kann unter Beachtung der jeweils konkreten Einsatzbedingungen ein weitgehend optimales Strömungsverhalten erreicht werden, so dass keine Pfeifgeräusche oder ähnliche akustische Probleme auftreten.

Unabhängig vom gewählten Winkel und der konkreten Ausgestaltung des Grundkörpers als Horizontallamelle, Vertikallamelle oder Schließklappe besteht der Grundkörper vorzugsweise aus einem harten Kunststoffmaterial. Die wellenförmige Querschnittskontur des Grundkörpers kann an verschiedenen Abschnitten auch mit jeweils unterschiedlichen Überdeckungen ausgeführt werden. In einer vorteilhaften Ausgestaltung können dem Grundkörper an Teilabschnitten seiner Umfangskontur Segmente aus einem weichen Kunststoffmaterial zugeordnet werden. Dies kann mittels einer chemischen Verbindung erfolgen. Die zugeordneten Segmente bewirken bei einer geschlossenen Stellung der Lamellen oder Schließklappen eine gute Abdichtung, weil das weiche Material vollflächig anliegt. Neben der Dichtfunktion werden somit auch Geräusche durch vibrierende Bauteile vermieden.

Weitere Vorteile ergeben sich, sofern der Übergangsbereich zwischen den beiden unterschiedlichen Kunststoffmaterialien stufenförmig ausgestaltet ist. Hierbei umfasst dieser Übergangsbereich vorzugsweise einen geradlinigen Abschnitt und einen bogenförmigen Abschnitt. Somit vergrößert sich die für eine Verbindung verfügbare Bauteiloberfläche und das weiche Material kann am harten Material formstabil abgestützt werden.

Bei einer Ausgestaltung der Luftdüse weisen die Lamellen jeweils eine gerade stirnseitige Kante auf, die in einen dreidimensional wellenförmig gekrümmten Flächenabschnitt übergeht. Eine derartige Ausgestaltung von dreidimensionalen, wellenförmig gekrümmten Flächenabschnitten ist sowohl an Horizontallamellen als auch an Vertikallamellen möglich, wobei stets mit kostengünstigen und wenig Bauraum beanspruchenden Bauteilen eine Drallwirkung auf die durchströmende Luft erzeugt wird, die am Ausströmquerschnitt eine geweitete, weiche und diffuse Strömung gewährleistet.

Unabhängig von der konkreten Lamellenausgestaltung wird die gerade stirnseitige Lamellenkante stets rechtwinklig zur Längsachse des Düsengehäuses angeordnet. Hingegen kann der wellenförmige Lamellenabschnitt alternativ in Richtung der vorderseitigen Luftausströmöffnung oder in Richtung des rückseitigen Anschlusses für den Luftzuführschacht oder die Luftzuführleitung angeordnet werden.

In weiterer Ausgestaltung wird vorgeschlagen, dass bei mehreren Lamellen die wellenförmigen Abschnitte zueinander gegenläufig verlaufen. Dadurch wird eine fächerartige Luftausströmung erreicht. Dabei kann eine mittlere Lamelle mit einer ebenen rechteckigen Grundfläche verwendet werden, der sich nach beiden Seiten die anderen Lamellen mit gegenläufig orientierten wellenförmigen Abschnitten anschließen. Auch bei einer solchen Ausgestaltung kann der wellenförmige Lamellenabschnitt alternativ in Richtung der vorderseitigen Luftausströmöffnung oder in Richtung des rückseitigen Anschlusses für den Luftzuführschacht oder die Luftzuführleitung angeordnet werden.

Nachfolgend wird die Erfindung anhand der in den Figuren dargestellten Ausführungsbeispiele ergänzend erläutert.

In den Zeichnungen zeigen:
- Fig. 1: eine erfindungsgemäß ausgestaltete Schließklappe in perspektivischer Ansicht,
- Fig. 2: eine erfindungsgemäß ausgestaltete Schließklappe im Querschnitt in Längsansicht,
- Fig. 3: eine erfindungsgemäß ausgestaltete Schließklappe im Querschnitt in Seitenansicht,
- Fig. 4: das in Fig. 3 mit "W" gekennzeichnete Detail in vergrößerter Darstellung,
- Fig. 5: eine Luftdüse in einer ersten Ausführung mit Lamellen nach der Erfindung in der Vorderansicht,
- Fig. 6: den Lamellensatz gemäß Fig. 5 als Detail in perspektivischer Ansicht,
- Fig. 7: eine erfindungsgemäße Luftdüse in einer zweiten Ausführung in der Vorderansicht,
- Fig. 8: den Lamellensatz gemäß Fig. 7 als Detail in perspektivischer Ansicht,
- Fig. 9: eine erfindungsgemäße Luftdüse in einer dritten Ausführung in der Vorderansicht,
- Fig. 10: den Lamellensatz gemäß Fig. 9 als Detail in perspektivischer Ansicht,
- Fig. 11: eine erfindungsgemäße Luftdüse in einer vierten Ausführung in der Vorderansicht und
- Fig. 12: den Lamellensatz gemäß Fig. 11 als Detail in perspektivischer Ansicht.

Die vorgeschlagenen Bauteile sind zur Führung eines Luftstroms aus einem Luftzuführschacht oder einer Leitung in Heizungs-, Lüftungs- oder Klimaanlagen geeignet, vorzugsweise zum Beispiel in Fahrgasträumen in Kraftfahrzeugen, bei denen das Gehäuse der Luftdüse in einen Wanddurchbruch einsetzbar ist. Das Gehäuse weist eine vorderseitige Luftausströmöffnung und einen rückseitigen Anschluss für einen Luftzuführschacht oder eine Luftzuführleitung auf. Weiterhin sind im Düsengehäuse Lamellen und/oder Schließklappen abgestützt, die in Abhängigkeit ihrer jeweiligen Stellung eine unterschiedliche Ableitung des aus der Luftdüse austretenden Luftstroms bewirken.

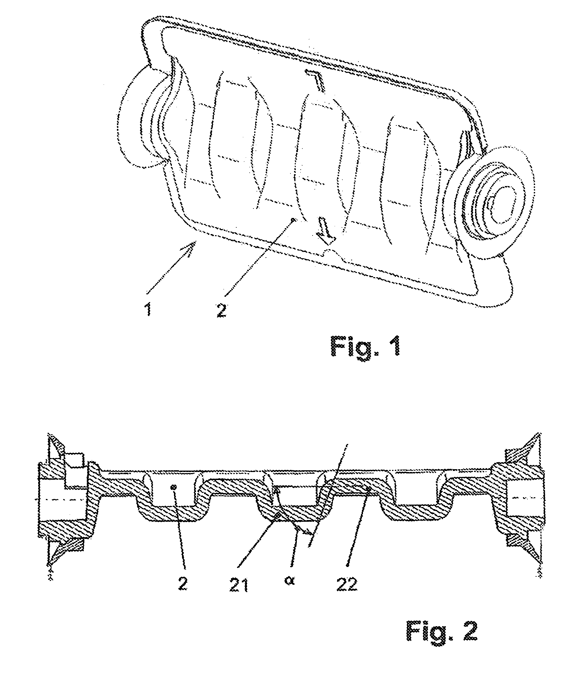

In der Zeichnung ist in Fig. 1 eine erfindungsgemäß ausgestaltete Schließklappe 1 dargestellt. Die Schließklappe 1 weist einen Grundkörper 2 auf, der mit einer wellenförmigen Querschnittskontur ausgestaltet ist. Eine derartige Kontur kann ebenso an anderen Bauteilen zur Luftführung innerhalb einer Luftdüse ausgestaltet werden, insbesondere an in der Zeichnung nicht näher dargestellten Horizontallamellen und Vertikallamellen.

Aus Fig. 2 ist ersichtlich, dass der Übergangsbereich zwischen zwei benachbarten Abschnitten 21 und 22 der wellenförmigen Querschnittskontur des Grundkörpers 2 im Längsschnitt mit einem Winkel α von etwa 80° ausgestaltet ist. In Abhängigkeit der jeweils konkreten Anwendung werden für diesen Übergangsbereich vorzugsweise Winkel zwischen α 60° und 80° gewählt.

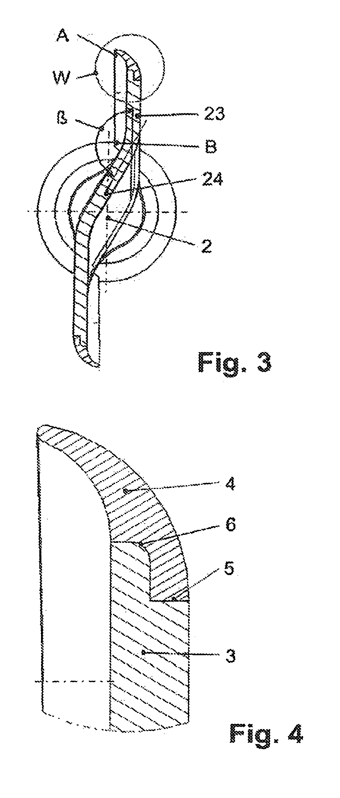

Aus Fig. 3 ist ersichtlich, dass der Übergangsbereich zwischen zwei benachbarten Abschnitten 23 und 24 der wellenförmigen Querschnittskontur des Grundkörpers 2 im Seitenschnitt mit einem Winkel β von etwa 150° ausgestaltet ist. In Abhängigkeit der jeweils konkreten Anwendung werden für diesen Übergangsbereich vorzugsweise Winkel β zwischen 140° und 160° gewählt.

Weiterhin ist aus Fig. 3 ersichtlich, dass die wellenförmigen Querschnittskonturen an der Schließklappe 1 mit unterschiedlichen Überdeckungen A und B ausgestaltet sind. Hierbei ist die Überdeckung A an der außen liegenden Anlagefläche zum Düsengehäuse größer als die Überdeckung B am innen liegenden Übergang zur Drehachse der Schließklappe 1.

Der Grundkörper 2 mit der wellenförmigen Querschnittskontur der Schließklappe 1 besteht aus einem harten Kunststoffmaterial 3. Diesem Grundkörper 2 sind an Teilabschnitten seiner Umfangskontur Segmente aus einem weichen Kunststoffmaterial 4 zugeordnet. Aus Fig. 4 ist ersichtlich, dass der Übergangsbereich zwischen dem harten Kunststoffmaterial 3 und den Segmenten aus weichem Kunststoffmaterial 4 stufenförmig ausgestaltet ist. Dabei weist dieser Übergangsbereich einen ersten geradlinigen Abschnitt 5 und einen zweiten bogenförmigen Abschnitt 6 auf.

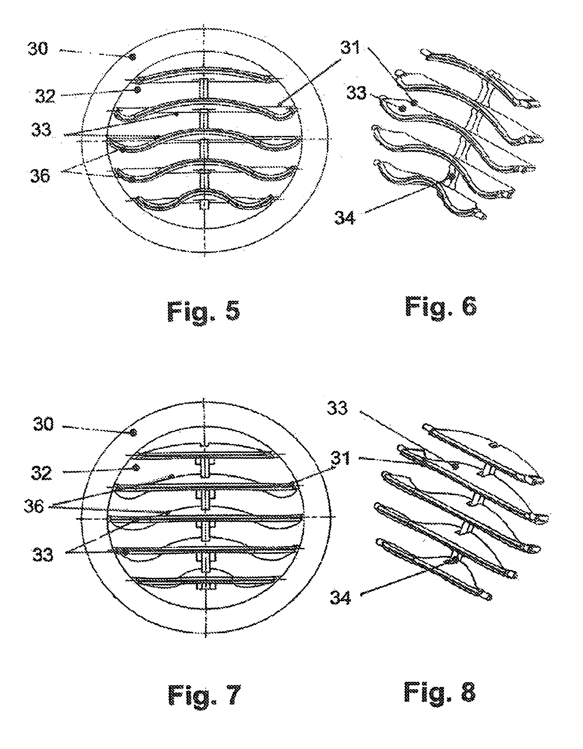

In der Zeichnung sind in Figuren 5 und 6 ferner Bauteile einer Luftdüse zur Führung eines Luftstroms aus einem Luftzuführschacht oder aus einer Luftzuführleitung in Heizungs-, Lüftungs- oder Klimaanlagen dargestellt, wobei eine solche Luftdüse insbesondere für Fahrgasträume in Kraftfahrzeugen geeignet ist. Eine derartige Luftdüse besteht aus einem Gehäuse 30, das in einen Wanddurchbruch einsetzbar ist, der in der Zeichnung allerdings nicht näher dargestellt ist. Das Gehäuse 30 weist einen ebenfalls nicht näher dargestellten rückseitigen Anschluss für einen Luftzuführschacht oder eine Luftzuführleitung sowie eine vorderseitige Luftausströmöffnung 32 auf. Im Gehäuse 30 sind Lamellen 33 als Luftleitmittel angeordnet, die beispielsweise mittels einer Koppelstange 34 gleichsinnig verlagert sein können und die in Abhängigkeit von ihrer jeweiligen Stellung eine unterschiedliche Ableitung des austretenden Luftstroms bewirken. Ein derartiger Aufbau einer Luftdüse ist grundsätzlich bekannt, so dass hierzu auf nähere Darlegungen verzichtet werden kann.

Wesentlich im vorliegenden Sachverhalt ist jedoch, dass gemäß diesem Beispiel die Lamellen 33 jeweils eine gerade stirnseitige Kante 31 aufweisen, die in einen dreidimensional wellenförmig gekrümmten Flächenabschnitt 36 übergeht.

Gemäß Fig. 5 verläuft die gerade stirnseitige Lamellenkante 31 rechtwinklig zur Längsachse vom Gehäuse 30 der Luftdüse. Der wellenförmige Lamellenabschnitt 36 ist in Richtung der vorderseitigen Luftausströmöffnung 32 angeordnet, so dass die Wellung zum Düsenaustritt gerichtet ist. Die entsprechende Baugruppe mit Lamellen 33 und Koppelstange 34 ist in Fig. 6 nochmals als Detail dargestellt.

Gemäß Fig. 7 verläuft die gerade stirnseitige Lamellenkante 31 ebenfalls rechtwinklig zur Längsachse vom Gehäuse 30 der Luftdüse. Der wellenförmige Lamellenabschnitt 36 ist hier jedoch in Richtung des rückseitigen Anschlusses für den Luftzuführschacht oder die Luftzuführleitung angeordnet, so dass die Wellung zum Düseneintritt gerichtet ist. Die entsprechende Baugruppe mit Lamellen 33 und Koppelstange 34 ist in Fig. 8 nochmals als Detail dargestellt.

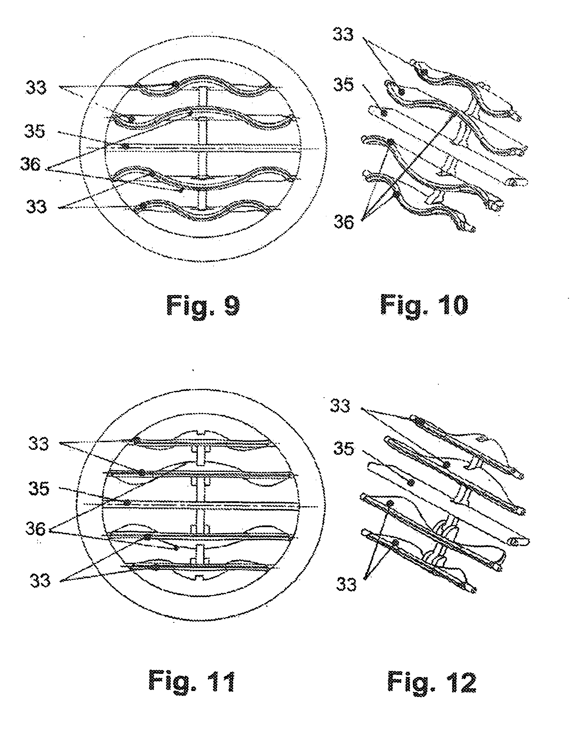

Fig. 9 bis Fig. 12 zeigen weitere Varianten, bei denen zwischen mehreren Lamellen 33 mit wellenförmigen Abschnitten 36 jeweils eine mittlere Lamelle 35 mit einer ebenen rechteckigen Grundfläche angeordnet ist. Ausgehend von der mittleren Lamelle 35 sind die wellenförmigen Abschnitte 36 der Lamellen 33 jeweils gegenläufig zueinander angeordnet. Diese wellenförmigen Lamellenabschnitte 36 sind gemäß Fig. 9 und Fig. 10 in Richtung der vorderseitigen Luftausströmöffnung sowie gemäß Fig. 11 und Fig. 12 in Richtung des rückseitigen Anschlusses für den Luftzuführschacht oder die Luftzuführleitung angeordnet.

In der Zeichnung sind die dreidimensional wellenförmig gekrümmten Flächenabschnitte 36 jeweils an Horizontallamellen 33 ausgestaltet. Dieselbe funktionelle Wirkung kann erreicht werden, wenn die wellenförmig gekrümmten Flächenabschnitte 36 an Vertikallamellen ausgestaltet werden.

### Bezugszeichenliste

- 1: Schließklappe
- 2: Grundkörper
- 21: wellenförmiger Abschnitt am Grundkörper
- 22: wellenförmiger Abschnitt am Grundkörper
- 23: wellenförmiger Abschnitt am Grundkörper
- 24: wellenförmiger Abschnitt am Grundkörper
- 3: hartes Kunststoffmaterial
- 4: weiches Kunststoffmaterial
- 5: geradliniger Abschnitt
- 6: bogenförmigen Abschnitt
- 30: Gehäuse
- 31: gerade Stirnkante
- 32: Luftausströmöffnung
- 33: Lamelle
- 34: Koppelstange
- 35: Lamelle
- 36: wellenförmiger Abschnitt
- A: äußere Überdeckung
- B: innere Überdeckung
- α: Winkel zwischen zwei wellenförmigen Abschnitten
- β: Winkel zwischen zwei wellenförmigen Abschnitten

## Patentansprüche

1. Luftdüse zur Führung eines Luftstroms aus einem Luftzuführschacht oder einer Leitung in Heizungs-, Lüftungs- oder Klimaanlagen, insbesondere für Fahrgasträume in Kraftfahrzeugen, bestehend aus einem Gehäuse, das in einen Wanddurchbruch einsetzbar ist und das eine vorderseitige Luftausströmöffnung und einen rückseitigen Anschluss für einen Luftzuführschacht oder eine Luftzuführleitung aufweist und wobei im Gehäuse Lamellen und/oder Schließklappen abgestützt sind, die in Abhängigkeit ihrer jeweiligen Stellung eine unterschiedliche Ableitung des aus der Luftdüse austretenden Luftstroms bewirken, wobei in dem Gehäuse zumindest ein Bauteil zur Luftführung mit einem Grundkörper (2) vorgesehen ist, der mit einer wellenförmigen Flächenkontur quer zur Strömungsrichtung des Luftstromes oder in einem bestimmten Winkel hierzu versehen ist, wobei dieses Bauteil mindestens eine Horizontallamelle (33) und/oder eine Vertikallamelle und/oder eine Schließklappe (1) ist, **dadurch gekennzeichnet, dass** dieses Bauteuil eine gerade stirnseitige oder rückseitige Kante (6,31) aufweist, die in einen dreidimensional wellenförmig gekrümmten Flächenabschnitt (22,36) übergeht.

2. Luftdüse nach Anspruch 1, **dadurch gekennzeichnet, dass** dieses Bauteil eine Schließklappe ist, wobei an der Schließklappe (1) die Überdeckung (A) der wellenförmigen Flächenkontur an der außen liegenden Anlagefläche zum Düsengehäuse größer ist als die Überdeckung (B) der wellenförmigen Querschnittskontur am innen liegenden Übergang zur Drehachse der Schließklappe (1).

3. Luftdüse nach Anspruch 1, **dadurch gekennzeichnet, dass** der Obergangsbereich zwischen zwei benachbarten Abschnitten (21; 22) der wellenförmigen Querschnittskontur mit einem Winkel (α) von 60° bis 80° ausgestaltet ist.

4. Luftdüse nach Anspruch 1, **dadurch gekennzeichnet, dass** der Übergangsbereich zwischen zwei benachbarten Abschnitten (23; 24) der wellenförmigen Querschnittskontur mit einem Winkel (β) von 140° bis 160° ausgestaltet ist.

5. Luftdüse nach Anspruch 1, **dadurch gekennzeichnet, dass** der Grundkörper (2) mit der wellenförmigen Querschnittskontur aus einem harten Kunststoffmaterial (3) besteht.

6. Luftdüse nach Anspruch 5, **dadurch gekennzeichnet, dass** dem Grundkörper (2) mit der wellenförmigen Querschnittskontur an Teilabschnitten seiner Umfangskontur Segmente aus einem weichen Kunststoffmaterial (4) zugeordnet sind.

7. Luftdüse nach Anspruch 6, **dadurch gekennzeichnet, dass** der Übergangsbereich zwischen dem Grundkörper (2) aus einem harten Kunststoffmaterial (3) und den zugeordneten Segmenten aus einem weichen Kunststoffmaterial (4) stufenförmig ausgestaltet ist.

8. Luftdüse nach Anspruch 7, **dadurch gekennzeichnet, dass** der stufenförmige Übergangsbereich einen ersten geradlinigen Abschnitt (5) und einen zweiten bogenförmigen Abschnitt (6) aufweist.

9. Luftdüse nach Anspruch 1, **dadurch gekennzeichnet, dass** dieses Bauteil eine Lamelle ist, wobei die gerade stirnseitige Lamellenkante (31) rechtwinklig zur Längsachse des Gehäuses (30) der Luftdüse und der wellenförmige Lamellenabschnitt (36) in Richtung der vorderseitigen Luftausströmöffnung (32) angeordnet ist.

10. Luftdüse nach Anspruch 1, **dadurch gekennzeichnet, dass** dieses Bauteil eine Lamelle ist, wobei die gerade stirnseitige Lamellenkante (31) rechtwinklig zur Längsachse des Gehäuses (31) der Luftdüse und der wellenförmige Lamellenabschnitt (36) in Richtung des rückseitigen Anschlusses für den Luftzuführschacht oder die Luftzuführleitung angeordnet ist.

11. Luftdüse nach Anspruch 1, **dadurch gekennzeichnet, dass** die Luftdüse mehrere Lamellen (33; 35) aufweist, die mit wellenförmigen Abschnitten (36) ausgestaltet sind oder von denen die mittlere Lamelle (35) mit einer ebenen rechteckigen Grundfläche ausgestaltet ist, wobei die wellenförmigen Abschnitte (36) der Lamellen (33) ausgehend von der mittleren Lamelle (35) jeweils gegenläufig zueinander angeordnet sind.

12. Luftdüse nach Anspruch 11, **dadurch gekennzeichnet, dass** die wellenförmigen Lamellenabschnitte (36) in Richtung der vorderseitigen Luftausströmöffnung (32) verlaufend angeordnet sind.

13. Luftdüse nach Anspruch 11, **dadurch gekennzeichnet, dass** die wellenförmigen Lamellenabschnitte (36) in Richtung des rückseitigen Anschlusses für den Luftzuführschacht oder die Luftzuführleitung verlaufend angeordnet sind.

## Claims

1. Air nozzle for guiding an air flow from an air feed shaft or a duct in heating, ventilating or air-conditioning installations, particularly for passenger compartments in motor vehicles, consisting of a housing, which is insertable into a wall opening and which has a frontal air outflow opening and a rear connection for an air feed shaft or an air feed duct and wherein slats and/or closing flaps are supported in the housing and in dependence on their respective setting produce a different diversion of the air flow issuing from the air nozzle, wherein provided in the housing is at least one component for air guidance with a base body (2), which is provided with a wave-shaped surface contour transversely to the flow direction of the air flow or at a defined angle thereto, wherein this component is at least one horizontal slat (33) and/or a vertical slat and/or a closing flap (1), **characterised in that** this component has a straight front-end or rear-end edge (6, 31) which goes over into an area section (22, 36) which is three-dimensionally curved in wave shape.

2. Air nozzle according to claim 1, **characterised in that** this component is a closing flap, wherein at the closing flap (1) the overlap (A) of the wave-shaped area contour at the outwardly disposed contact surface relative to the nozzle housing is greater than the overlap (B) of the wave-shaped cross-sectional contour at the inwardly disposed transition to the axis of rotation of the closing flap (1).

3. Air nozzle according to claim 1, **characterised in that** the transition region between two adjacent section (21; 22) if the wave-shaped cross-sectional contour is formed with an angle (α) of 60° to 80°.

4. Air nozzle according to claim 1, **characterised in that** the transition region between two adjacent sections (23; 24) of the wave-shaped cross-sectional contour is formed with an angle (β) of 140° to 160°.

5. Air nozzle according to claim 1, **characterised in that** the base body (2) with the wave-shaped cross-sectional contour consists of a hard plastics material (3).

6. Air nozzle according to claim 5, **characterised in that** segments of a soft plastics material (4) are associated with the base body (2) with the wave-shaped cross-sectional contour at sub-sections of its circumferential profile.

7. Air nozzle according to claim 6, **characterised in that** the transition region between the base body (2) is formed in steps from a hard plastics material (3) and the associated segments from a soft plastics material (4).

8. Air nozzle according to claim 7, **characterised in that** the stepped transition region has a first rectilinear section (5) and a second curved section (6).

9. Air nozzle according to claim 1, **characterised in that** this component is a slat, wherein the straight front-end slat edge (31) is arranged at right angles to the longitudinal axis of the housing (30) of the air nozzle and the wave-shaped slat section (36) is arranged in the direction of the frontal air outflow opening (32).

10. Air nozzle according to claim 1, **characterised in that** this component is a slat, wherein the straight front-end slat edge (31) is arranged at right angles to the longitudinal axis of the housing (31) of the air noble and the wave-shaped slat section (36) is arranged in the direction of the rear connection for the air feed shaft or the air feed duct.

11. Air nozzle according to claim 1, **characterised in that** the air nozzle comprises several slats (33; 35), which are formed with wave-shaped sections (36) or of which the middle slat (35) is formed with a planar rectangular area, wherein the wave-shaped sections (36) of the slats (33) are arranged, starting from the middle slat (35), respectively in opposite sense relative to one another.

12. Air nozzle according to claim 11, **characterised in that** the wave-shaped slat sections (36) are arranged to extend in the direction of the frontal air outflow opening (32).

13. Air nozzle according to claim 11, **characterised in that** the wave-shaped slat sections (36) are arranged to run in the direction of the rear connection for the air feed shaft or the air feed duct.

## Revendications

1. Tuyère à air pour le guidage d'un écoulement d'air depuis une gaine d'alimentation d'air ou une conduite dans des installations de chauffage, de ventilation ou de climatisation, en particulier pour des habitacles dans des véhicules automobiles, comprenant un boîtier, susceptible d'être mis en place dans une ouverture d'une paroi et comportant une ouverture de sortie d'air du côté avant et un raccordement du côté arrière pour une gaine d'alimentation d'air ou un conduit d'alimentation d'air, des lamelles et/ou des clapets de fermeture étant soutenus dans le boîtier, lesquels entraînent, en fonction de leurs positions respectives, une dérivation différente de l'écoulement d'air sortant de la tuyère à air, dans le boîtier étant prévu au moins un composant pour le guidage de l'air, avec un corps de base (2) qui est pourvu d'un contour surfacique de forme ondulée transversalement à la direction d'écoulement de l'écoulement d'air, ou sous un angle déterminé par rapport à celle-ci, ledit composant étant au moins une lamelle horizontale (33) et/ou une lamelle verticale et/ou un clapet de fermeture (1),
**caractérisée en ce que** ledit composant comporte une arête rectiligne (6, 31) du côté frontal ou du côté postérieur, qui se transforme en un tronçon de surface (22, 36) incurvé sous forme ondulée tridimensionnelle.

2. Tuyère à air selon la revendication 1, **caractérisée en ce que** ce composant est un clapet de fermeture, et sur ledit clapet de fermeture (1), le recouvrement (A) du contour de surface de forme ondulée au niveau de la surface d'appui extérieure vers le boîtier de tuyère est supérieur au recouvrement (B) du contour de section de forme ondulée au niveau de la transition intérieure vers l'axe de rotation du clapet de fermeture (1).

3. Tuyère à air selon la revendication 1, **caractérisée en ce que** la zone de transition entre deux tronçons voisins (21 ; 22) du contour de section transversale de forme ondulée est réalisée avec un angle (α) de 60° à 80°.

4. Tuyère à air selon la revendication 1, **caractérisée en ce que** la zone de transition entre deux tronçons voisins (23 ; 24) du contour de section de forme ondulée est réalisée avec un angle (β) de 140° à 160°.

5. Tuyère à air selon la revendication 1, **caractérisée en ce que** le corps de base (2) avec le contour de section transversale de forme ondulée est réalisé en une matière plastique dure.

6. Tuyère à air selon la revendication 5, **caractérisée en ce que** des segments en une matière plastique souple (4) sont associés au corps de base (2) avec le contour de section transversale de forme ondulée sur des tronçons partiels de son contour périphérique.

7. Tuyère à air selon la revendication 6, **caractérisée en ce que** la zone de transition entre le corps de base (2) en une matière plastique dure (3) et les segments associés en matière plastique souple (4) est conçue avec une forme en gradins.

8. Tuyère à air selon la revendication 7, **caractérisée en ce que** la zone de transition en gradins comprend un premier tronçon rectiligne (5) et un deuxième tronçon (6) de forme arquée.

9. Tuyère à air selon la revendication 1, **caractérisée en ce que** ce composant est une lamelle, et l'arête de lamelle rectiligne (31) du côté frontal est agencée à angle droit par rapport à l'axe longitudinal du boîtier (30) de la tuyère à air, et le tronçon de lamelle (36) sous forme ondulée est agencé dans la direction de l'ouverture de sortie d'air (32) du côté frontal.

10. Tuyère à air selon la revendication 1, **caractérisée en ce que** ce composant est une lamelle, dans laquelle l'arête de lamelle rectiligne (31) du côté frontal est agencée à angle droit par rapport à l'axe longitudinal du boîtier (31) de la tuyère à air, et le tronçon de lamelle (36) sous forme ondulée est agencé en direction du raccord postérieur pour la gaine d'alimentation d'air ou la conduite d'alimentation d'air.

11. Tuyère à air selon la revendication 1, **caractérisée en ce que** la tuyère à air comprend plusieurs lamelles (33 ; 35) qui sont conçues avec des tronçons de forme ondulée (36), ou parmi lesquelles la lamelle médiane (35) est conçue avec une surface de base rectangulaire plane, les tronçons de forme ondulée (36) des lamelles (33) étant agencés respectivement en sens inverse les uns des autres en partant de la lamelle médiane (35).

12. Tuyère à air selon la revendication 11, **caractérisée en ce que** les tronçons de lamelle de forme ondulée (36) sont agencés de manière à s'étendre dans la direction de l'ouverture de sortie d'air (32) du côté frontal.

13. Tuyère à air selon la revendication 11, **caractérisée en ce que** les tronçons de lamelle de forme ondulée (36) sont agencés de manière à s'étendre dans la direction du raccordement postérieur pour la gaine d'alimentation d'air ou la conduite d'alimentation d'air.
